# EUROPEAN PATENT APPLICATION

(11) **EP 2 254 062 A1**
(43) Date of publication of application: **24.11.2010**
(21) Application number: 10163481.4
(22) Date of filing: 20.05.2010
(51) Int. Cl.: G06F 17/30, G06F 3/048, H04M 1/725, G06Q 10/00

(54) **Method for controlling menu in mobile terminal and mobile terminal using the same**

(30) Priority: 21.05.2009 KR 20090044438
(71) Applicant: LG Electronics Inc., Seoul 150-721 (KR)
(72) Inventor: CHO, Seong Yoon, 153-801 SEOUL (KR); CHO, Hye Youn, 153-801 SEOUL (KR); YEO, Byung Sang, 153-801 SEOUL (KR); YUN, Yee Rang, 153-801 SEOUL (KR); SONG, Yoo Mee, 153-801 SEOUL (KR); LEE, Dong Seok, 153-801 SEOUL (KR)
(74) Representative: Cabinet Plasseraud

(57) **Abstract**

The present disclosure is related to a method for controlling a menu in a mobile terminal, the method comprising accessing (S5) a site having a predetermined internet address by connecting an internet server, extracting (S7) a menu relation information related to a menu stored in the mobile terminal from the site and displaying (S9) the menu and the menu relation information by adding the menu relation information to the menu, and a mobile terminal using the same.

## Description

This application claims the benefit of the Korean Patent Application No. 10-2009-0044438, filed on May 21,2009.

The present disclosure relates to a method for displaying web page and a mobile terminal using the same.

Generally, terminals can be classified into mobile/portable terminals and stationary terminals. The mobile terminals can be further classified into handheld terminals and vehicle mount terminals according to possibility of user's direct portability.

As functions of the terminal are diversified, the terminal is implemented as a multimedia player provided with composite functions such as photographing of photos or moving pictures, playback of music or moving picture files, game play, broadcast reception and the like, to name some.

To support and increase of the terminal functions, it may be able to consider the improvement of structural part and/or software part of the terminal. The recent mobile terminal has been improved to have various functions as a multimedia player as well as a basic function such as call.

For example, the mobile terminal may access the internet server to display the web page through the wireless communication network (also known as the mobile communication network) for telephone call.

Furthermore, the mobile terminal may include a short-range wireless communication means such as Bluetooth. The mobile terminal may transmit and receive files through the short-range wireless communication channel between the terminals having the short-range wireless communication means.

Accordingly, an object of the present disclosure is to provide a method for controlling a menu in a mobile terminal, the method comprising: accessing a site having a predetermined internet address by connecting an internet server; extracting a menu relation information related to the menu stored in the mobile terminal from the site; and displaying the menu and the menu relation information by adding the menu relation information to the menu.

According to the one aspect of the present disclosure, the menu is a phone book screen where a phone book list is displayed, and the menu relation information is a contact list stored in the site.

According to another aspect of the present disclosure, the method further comprises Executing a function of the site on an item of the phone book list, wherein the contact list is displayed to be identical from the phone book list.

According to still another aspect of the present disclosure, the menu is a gallery screen where a picture file is displayed, and the menu relation information is an image file stored in the site.

According to still further aspect of the present disclosure, the method further comprises executing a function of the site on the picture file, wherein the image file is displayed to be identical from the picture file.

According to still further aspect of the present disclosure, the menu is an idle screen, and the menu relation information is a status information stored in the site, which is a tool bar displayed on the idle screen.

According to still further aspect of the present disclosure, the method further comprises executing a function of the site by selecting the tool bar.

According to still further aspect of the present disclosure, the step of accessing a site having a predetermined internet address by connecting an internet server comprises accessing the plurality of sites having a predetermined internet address by connecting the internet server, and the step of displaying the menu and the menu relation information by adding the menu relation information to the menu comprises identically displaying the menu relation information in order to inform a source of the menu relation information.

Moreover, another object of the present disclosure is to provide A mobile terminal comprising: a display unit configured to display a menu; a wireless communication module configured to access an internet server; and a controller configured to access a site having a predetermined internet address by connecting an internet server; to extract a menu relation information related to a menu stored in the mobile terminal from the site; and to display the menu and the menu relation information by adding the menu relation information to the menu.

According to another aspect of the present disclosure, the menu is a phone book screen where a phone book list is displayed, and the menu relation information is a contact list stored in the site.

According to another aspect of the present disclosure, the controller is controllably to execute a function of the site on an item of the phone book list, and to display the contact list to be identical from the phone book list.

According to another aspect of the present disclosure, the menu is a gallery screen where a picture file is displayed, and the menu relation information is an image file stored in the site.

According to another aspect of the present disclosure, the controller is configured to execute a function of the site on the picture file, and to display the image file on the display unit to be identical from the picture file.

According to another aspect of the present disclosure, the menu is an idle screen, and the menu relation information is a status information stored in the site, which is a tool bar displayed on the idle screen..

According to still further aspect of the present disclosure, the mobile terminal further comprises a user input unit configured to select the tool bar; wherein the controller is configured to execute the function of the site if a control signal on the tool bar is generated through the user input unit.

According to still further aspect of the present disclosure, the mobile terminal further comprises further comprising a position information module configured to confirm a position of the mobile terminal, wherein the controller is configured to activate the wireless communication module if the mobile terminal is determined to be entered in a predetermined area through the position information module.

According to still further aspect of the present disclosure, the mobile terminal further comprises a user input unit configured to input an address of the predetermined area.

According to another aspect of the present disclosure, the mobile terminal further comprises a memory configured to store a map data; wherein, the display unit comprises a touch screen for displaying the map data, and the controller configured to set the predetermined area which the pointing device appoints on the map data displayed on the touch screen.

According to another aspect of the present disclosure, a set up icon for setting up the site is displayed on the display unit.

According to another aspect of the present disclosure, the controller is configured to activate the wireless communication module, if an area of the address is set up from the user input unit and the mobile terminal is entered in the area.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

It is to be understood that both the foregoing general description and the following detailed description of the present disclosure are exemplary and explanatory and are intended to provide further explanation of the disclosure as claimed.

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 is a block diagram of mobile terminal related to the one embodiment of the present disclosure;

FIG. 2A is a front-view of a mobile terminal according to an example embodiment.

FIG. 2B is a perspective diagram of a backside of the mobile terminal shown in FIG. 2A.

FIG. 3 is a flow chart for explaining the method of controlling a menu in a mobile terminal, according to one embodiment of the present disclosure.

FIG. 4A-4D illustrate a first implementation of the mobile terminal where the method of controlling a menu in a mobile terminal is applied.

FIG. 5A-5C illustrate a second implementation of the mobile terminal where the method of controlling a menu in a mobile terminal is applied.

FIG. 6A-6B illustrate a third implementation of the mobile terminal where the method of controlling a menu in a mobile terminal is applied.

FIG. 7A-7C illustrate a fourth implementation of the mobile terminal where the method of controlling a menu in a mobile terminal is applied.

FIG. 8A-8B illustrate a fifth implementation of the mobile terminal where the method of controlling a menu in a mobile terminal is applied.

The suffixes 'module', 'unit' and 'part' may be used for elements in order to facilitate the disclosure. Significant meanings or roles may not be given to the suffixes themselves and it is understood that the 'module', 'unit' and 'part' may be used together or interchangeably.

Embodiments of the present disclosure may be applicable to various types of terminals. Examples of such terminals may include mobile terminals as well as stationary terminals, such as mobile phones, user equipment, smart phones, DTV, computers, digital broadcast terminals, personal digital assistants, portable multimedia players (PMP) and/or navigators.

A further description may be provided with regard to a mobile terminal, although such teachings may apply equally to other types of terminals.

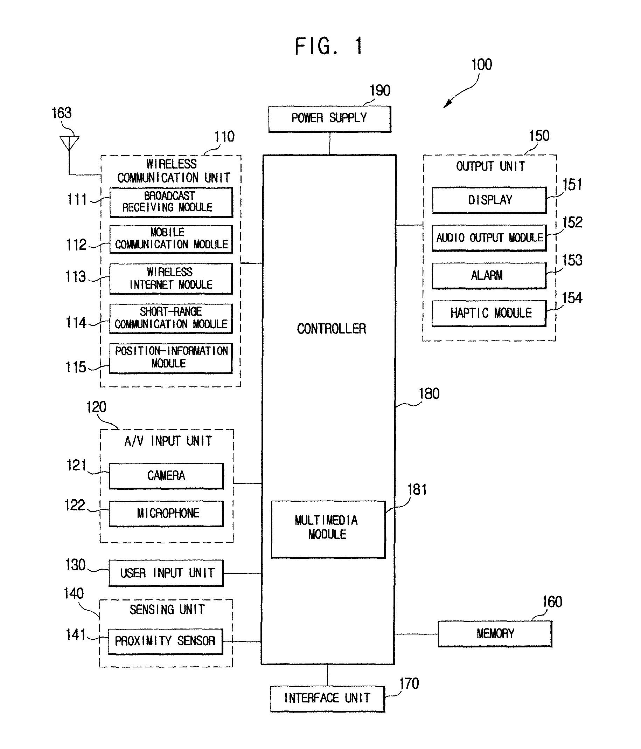

FIG. 1 is a block diagram of a mobile terminal in accordance with an example embodiment. Other embodiments and arrangements may also be provided. FIG. 1 shows a mobile terminal 100 having various components, although other components may also be used. More or less components may alternatively be implemented.

FIG. 1 shows that the mobile terminal 100 includes a wireless communication unit 110, an audio/video (A/V) input unit 120, a user input unit 130, a sensing unit 140, an output unit 150, a memory 160, an interface unit 170, a controller 180 and a power supply 190.

The wireless communication unit 110 may be configured with several components and/or modules. The wireless communication unit 110 may include a broadcast receiving module 111, a mobile communication module 112, a wireless Internet module 113, a short-range communication module 114 and a position-location module 115. The wireless communication unit 110 may include one or more components that permit wireless communication between the mobile terminal 100 and a wireless communication system or a network within which the mobile terminal 100 is located. In case of non-mobile terminals, the wireless communication unit 110 may be replaced with a wire communication unit. The wireless communication unit 110 and the wire communication unit may be commonly referred to as a communication unit.

The broadcast receiving module 111 may receive a broadcast signal and/or broadcast associated information from an external broadcast managing entity via a broadcast channel. The broadcast channel may include a satellite channel and a terrestrial channel. The broadcast managing entity may refer to a system that transmits a broadcast signal and/or broadcast associated information.

At least two broadcast receiving modules 111 may be provided in the mobile terminal 100 to pursue simultaneous reception of at least two broadcast channels or facilitation of broadcast channel switching.

Examples of broadcast associated information may include information associated with a broadcast channel, a broadcast program, a broadcast service provider, etc. For example, broadcast associated information may include an electronic program guide (EPG) of digital multimedia broadcasting (DMB) and an electronic service guide (ESG) of digital video broadcast-handheld (DVB-H).

The broadcast signal may be a TV broadcast signal, a radio broadcast signal, and/or a data broadcast signal. The broadcast signal may further include a broadcast signal combined with a TV or radio broadcast signal.

The broadcast receiving module 111 may receive broadcast signals transmitted from various types of broadcast systems. As a non-limiting example, the broadcasting systems may include digital multimedia broadcasting-terrestrial (DMB-T), digital multimedia broadcasting-satellite (DMB-S), digital video broadcast-handheld (DVB-H), a data broadcasting system known as media forward link only (MediaFLO®) and integrated services digital broadcast-terrestrial (ISDB-T). The receiving of multicast signals may also be provided. Data received by the broadcast receiving module 111 may be stored in the memory 160, for example.

The mobile communication module 112 may communicate wireless signals with one or more network entities (e.g. a base station or Node-B). The signals may represent audio, video, multimedia, control signaling, and data, etc.

The wireless Internet module 113 may support Internet access for the mobile terminal 100. This wireless Internet module 113 may be internally or externally coupled to the mobile terminal 100. Suitable technologies for wireless Internet may include, but are not limited to, WLAN (Wireless LAN)(Wi-Fi), Wibro (Wireless broadband), Wimax (World Interoperability for Microwave Access), and/or HSDPA (High Speed Downlink Packet Access). The wireless Internet module 113 may be replaced with a wire Internet module in non-mobile terminals. The wireless Internet module 113 and the wire Internet module may be referred to as an Internet module.

The short-range communication module 114 may facilitate short-range communications. Suitable technologies for short-range communication may include, but are not limited to, radio frequency identification (RFID), infrared data association (IrDA), ultra-wideband (UWB), as well as networking technologies such as Bluetooth and ZigBee.

The position-location module 115 may identify or otherwise obtain a location of the mobile terminal 100. The position-location module 115 may be provided using global positioning system (GPS) components that cooperate with associated satellites, network components, and/or combinations thereof.

The position-location module 115 may precisely calculate current 3-dimensional position information based on longitude, latitude and altitude by calculating distance information and precise time information from at least three satellites and then by applying triangulation to the calculated information. Location and time information may be calculated using three satellites, and errors of the calculated location position and time information may then be amended or changed using another satellite. The position-location module 115 may calculate speed information by continuously calculating a real-time current location.

The audio/video (A/V) input unit 120 may provide audio or video signal input to the mobile terminal 100. The AN input unit 120 may include a camera 121 and a microphone 122. The camera 121 may receive and process image frames of still pictures and/or video.

The microphone 122 may receive an external audio signal while the mobile terminal is in a particular mode, such as a phone call mode, a recording mode and/or a voice recognition mode. The received audio signal may then be processed and converted into digital data.

The mobile terminal 100, and in particular the AN input unit 120, may include a noise removing algorithm (or noise canceling algorithm) to remove noise generated in the course of receiving the external audio signal. Data generated by the AN input unit 120 may be stored in the memory 160, utilized by the output unit 150, and/or transmitted via one or more modules of the wireless communication unit 110. Two or more microphones and/or cameras may also be provided.

The user input unit 130 may generate input data responsive to user manipulation of an associated input device or devices. Examples of such devices may include a keypad, a dome switch, a touchpad (e.g., static pressure/capacitance), a jog wheel and/or a jog switch. A specific example is one in which the user input unit 130 is configured as a touchpad in cooperation with a display, as will be described below.

The sensing unit 140 may provide status measurements of various aspects of the mobile terminal 100. For example, the sensing unit 140 may detect an open/close status (or state) of the mobile terminal 100, a relative positioning of components (e.g., a display and a keypad) of the mobile terminal 100, a change of position of the mobile terminal 100 or a component of the mobile terminal 100, a presence or absence of user contact with the mobile terminal 100, and/or an orientation or acceleration/deceleration of the mobile terminal 100.

The mobile terminal 100 may be configured as a slide-type mobile terminal. In such a configuration, the sensing unit 140 may sense whether a sliding portion of the mobile terminal 100 is open or closed. The sensing unit 140 may also sense presence or absence of power provided by the power supply 190, presence or absence of a coupling or other connection between the interface unit 170 and an external device, etc.

The sensing unit 140 may include a proximity sensor 141.

The output unit 150 may generate an output relevant to a sight sense, an auditory sense, a tactile sense and/or the like. The output unit 150 may include a display 151, an audio output module 152, an alarm 153, a haptic module 154 and/or the like.

The display 151 may display (output) information processed by the terminal 100. For example, in case that the terminal is in a call mode, the display 151 may display a user interface (Ul) or a graphic user interface (GUI) associated with the call. If the mobile terminal 100 is in a video communication mode or a photograph mode, the display 151 may display a photographed and/or received picture, a Ul or a GUI.

The display 151 may include at least one of a liquid crystal display (LCD), a thin film transistor liquid crystal display (TFT LCD), an organic light-emitting diode (OLED), a flexible display, and a 3-dimensional display.

The display 151 may have a transparent or light-transmittive type configuration to enable an external environment to be seen through. This may be called a transparent display. A transparent OLED (TOLED) may be an example of a transparent display. A backside structure of the display 151 may also have the light-transmittive type configuration. In this configuration, a user may see an object located behind the terminal body through the area occupied by the display 151 of the terminal body.

At least two displays 151 may also be provided. For example, a plurality of displays may be provided on a single face of the terminal 100 by being built in one body or spaced apart from the single face. Alternatively, each of a plurality of displays may be provided on different faces of the terminal 100.

If the display 151 and a sensor for detecting a touch action (hereafter a touch sensor) are constructed in a mutual-layered structure (hereafter a touchscreen), the display 151 may be used as an input device as well as an output device. For example, the touch sensor may include a touch film, a touch sheet, a touchpad and/or the like.

The touch sensor may convert a pressure applied to a specific portion of the display 151 or a variation of electrostatic capacity generated from a specific portion of the display 151 to an electric input signal. The touch sensor may detect a pressure of a touch as well as a position and size of the touch.

If a touch input is provided to the touch sensor, signal(s) corresponding to the touch input may be transferred to a touch controller. The touch controller may process the signal(s) and then transfer corresponding data to the controller 180. The controller 180 may therefore know which portion of the display 151 is touched.

FIG. 1 shows that the proximity sensor 141 can be provided within the mobile terminal 100 enclosed by the touchscreen or around the touchscreen. The proximity sensor 141 may detect a presence or non-presence of an object approaching a prescribed detecting surface or an object existing around the proximity sensor 141 using an electromagnetic field strength or infrared ray without mechanical contact. The proximity sensor 141 may have a longer durability than the contact type sensor and may also have a greater usage than the contact type sensor.

The proximity sensor 141 may include one of a transmittive photoelectric sensor, a direct reflective photoelectric sensor, a mirror reflective photoelectric sensor, a radio frequency oscillation proximity sensor, an electrostatic capacity proximity sensor, a magnetic proximity sensor, an infrared proximity sensor and/or the like. If the touchscreen is an electrostatic type, the proximity sensor 141 may detect proximity of a pointer using a variation of an electric field according to the proximity of the pointer. In this case, the touchscreen (touch sensor) may be classified into the proximity sensor.

An action in which a pointer approaches the touchscreen without contacting the touchscreen may be called a proximity touch. An action in which a pointer actually touches the touchscreen may be called a contact touch. The location of the touchscreen proximity-touched by the pointer may be the position of the pointer that vertically opposes the touchscreen when the pointer performs the proximity touch.

The proximity sensor 141 may detect a proximity touch and/or a proximity touch pattern (e.g., a proximity touch distance, a proximity touch duration, a proximity touch position, a proximity touch shift state, etc.). Information corresponding to the detected proximity touch action and/or the detected proximity touch pattern may be outputted to the touchscreen.

The audio output module 152 may output audio data that is received from the wireless communication unit 110 in a call signal reception mode, a call mode, a recording mode, a voice recognition mode, a broadcast receiving mode and/or the like. The audio output module 152 may output audio data stored in the memory 160. The audio output module 152 may output an audio signal relevant to a function (e.g., a call signal receiving sound, a message receiving sound, etc.) performed by the mobile terminal 100. The audio output module 152 may include a receiver, a speaker, a buzzer and/or the like.

The alarm 153 may output a signal for announcing an event occurrence of the mobile terminal 100. An event occurring in the mobile terminal 100 may include one of a call signal reception, a message reception, a key signal input, a touch input and/or the like. The alarm 153 may output a signal for announcing an event occurrence by way of vibration or the like as well as a video signal or an audio signal. The video signal may be outputted via the display 151. The audio signal may be outputted via the audio output module 152. The display 151 or the audio output module 152 may be classified as part of the alarm 153.

The haptic module 154 may bring about various haptic effects that can be sensed by a user. Vibration is a representative example for the haptic effect brought about by the haptic module 154. Strength and pattern of the vibration generated from the haptic module 154 may be controllable. For example, vibrations differing from each other may be outputted in a manner of being synthesized together or may be sequentially outputted.

The haptic module 154 may generate various haptic effects including a vibration, an effect caused by such a stimulus as a pin array vertically moving against a contact skin surface, a jet power of air via outlet, a suction power of air via inlet, a skim on a skin surface, a contact of an electrode, an electrostatic power and the like, and/or an effect by hot/cold sense reproduction using an endothermic or exothermic device as well as the vibration.

The haptic module 154 may provide the haptic effect via direct contact. The haptic module 154 may enable a user to experience the haptic effect via muscular sense of a finger, an arm and/or the like. Two or more haptic modules 154 may be provided according to a configuration of the mobile terminal 100.

The memory 160 may store a program for operations of the controller 180. The memory 160 may temporarily store input/output data (e.g., phonebook, message, still picture, moving picture, etc.). The memory 160 may store data of vibration and sound in various patterns outputted in case of a touch input to the touchscreen.

The memory 160 may include at least one of a flash memory, a hard disk, a multimedia card micro type memory, a card type memory (e.g., SD memory, XD memory, etc.), a random access memory (RAM), a static random access memory (SRAM), a read-only memory (ROM), an electrically erasable programmable read-only memory, a programmable read-only memory, a magnetic memory, a magnetic disk, an optical disk, and/or the like. The mobile terminal 100 may operate in association with a web storage that performs a storage function of the memory 160 in the Internet.

The interface unit 170 may play a role as a passage to external devices connected to the mobile terminal 100. The interface unit 170 may receive data from an external device. The interface unit 170 may be supplied with a power and then the power may be delivered to elements within the mobile terminal 100. The interface unit 170 may enable data to be transferred to an external device from an inside of the mobile terminal 100. The interface unit 170 may include a wire/wireless headset port, an external charger port, a wire/wireless data port, a memory card port, a port for coupling to a device having an identity module, an audio input/output (I/O) port, a video input/output (I/O) port, an earphone port and/or the like.

The identity module may be a chip or card that stores various kinds of information for authenticating use of the mobile terminal 100. The identify module may include a user identity module (UIM), a subscriber identity module (SIM), a universal subscriber identity module (USIM) and/or the like. A device provided with the above identity module (hereafter an identity device) may be manufactured in the form of a smart card. The identity device may be connected to the mobile terminal 100 via the port.

The interface unit 170 may play a role as a passage for supplying a power to the mobile terminal 100 from a cradle that is connected to the mobile terminal 100. The interface unit 170 may play a role as a passage for delivering various command signals, which are inputted from the cradle by a user, to the mobile terminal 100. Various command signals inputted from the cradle or the power may work as a signal for recognizing that the mobile terminal 100 is correctly loaded in the cradle.

The controller 180 may control overall operations of the mobile terminal 100. For example, the controller 180 may perform control and processing relevant to a voice call, a data communication, a video conference and/or the like. The controller 180 may have a multimedia module 181 for multimedia playback. The multimedia module 181 may be implemented within the controller 180 or may be configured separate from the controller 180.

The controller 180 may perform pattern recognizing processing for recognizing a handwriting input performed on the touchscreen as a character an/or recognizing a picture drawing input performed on the touchscreen as an image.

The power supply 190 may receive an external or internal power and then supply the power required for operations of the respective elements under control of the controller 180.

Embodiments of the present disclosure explained in the following description may be implemented within a recording medium that can be read by a computer or a computer-like device using software, hardware or combination thereof.

According to the hardware implementation, arrangements and embodiments may be implemented using at least one of application specific integrated circuits (ASICs), digital signal processors (DSPs), digital signal processing devices DSPDs), programmable logic devices (PLDs), field programmable gate arrays (FPGAs), processors, controllers, microcontrollers, microprocessors and electrical units for performing other functions. In some cases, embodiments may be implemented by the controller 180.

For a software implementation, arrangements and embodiments described herein may be implemented with separate software modules, such as procedures and functions, each of which may perform one or more of the functions and operations described herein. Software codes may be implemented with a software application written in any suitable programming language and may be stored in memory such as the memory 160, and may be executed by a controller or processor, such as the controller 180.

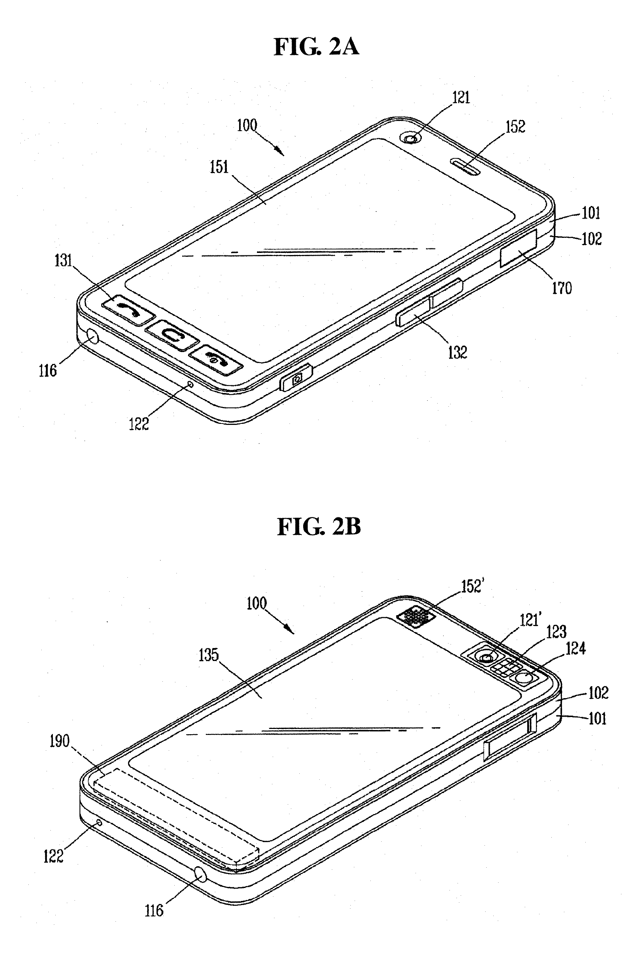

FIG. 2A is a front-view of a mobile terminal according to an example embodiment. Other embodiments, configurations and arrangements may also be provided.

As shown in FIG. 2A, the mobile terminal 100 may include a bar type terminal body. Embodiments of the mobile terminal may be implemented in a variety of different configurations. Examples of such configurations may include a folder-type, a slide-type, a bar-type, a rotational-type, a swing-type and/or combinations thereof.

The body may include a case (casing, housing, cover, etc.) that forms an exterior of the terminal. The case may be divided into a front case 101 and a rear case 102. Various electric/electronic parts may be provided in a space between the front case 101 and the rear case 102. A middle case may be further provided between the front case 101 and the rear case 102.

The cases may be formed by injection molding of synthetic resin or may be formed of metal substance such as stainless steel (STS), titanium (Ti) or the like, for example.

The display 151, the audio output unit 152, the camera 121, user input units 130/131/132, the microphone 122, the interface unit 170 and the like may be provided on the terminal body, and more particularly on the front case 101.

The display 151 may occupy most of a main face of the front case 101. The audio output module 152 and the camera 121 may be provided at an area adjacent to one end portion of the display 151, while the user input unit 131 and the microphone 122 may be provided at another area adjacent to the other end portion of the display 151. The user input unit 132 and the interface unit 170 may be provided on lateral sides of the front and rear cases 101 and 102.

The user input unit 130 may receive a command for controlling an operation of the mobile terminal 100. The user input unit 130 may include a plurality of manipulating units 131 and 132. The manipulating units 131 and 132 may be called a manipulating portion and may adopt any mechanism of a tactile manner that enables a user to perform a manipulation action by experiencing a tactile feeling.

Content inputted by the first manipulating unit 131 or the second manipulating unit 132 may be diversely set. For example, a command such as start, end, scroll and/or the like may be inputted to the first manipulating unit 131. A command for a volume adjustment of sound outputted from the audio output unit 152, a command for a switching to a touch recognizing mode of the display 151 or the like may be inputted to the second manipulating unit 132.

FIG. 2B is a perspective diagram of a backside of the mobile terminal shown in FIG. 2A. Other embodiments, configurations and arrangements may also be provided.

As shown in FIG. 2B, a camera 121' may be additionally provided on a backside of the terminal body, and more particularly on the rear case 102. The camera 121' may have a photographing direction that is substantially opposite to a photographing direction of the camera 121 (shown in FIG. 2A) and may have pixels differing from pixels of the camera 121.

For example, the camera 121 may have a lower number of pixels to capture and transmit a picture of user's face for a video call, while the camera 121' may have a greater number of pixels for capturing a general subject for photography without transmitting the captured subject. Each of the cameras 121 and 121' may be installed on the terminal body to be rotated and/or popped up.

A flash 123 and a mirror 124 may be additionally provided adjacent to the camera 121'. The flash 123 may project light toward a subject in case of photographing the subject using the camera 121'. If a user attempts to take a picture of the user (self-photography) using the camera 121', the mirror 124 may enable the user to view a user's face reflected by the mirror 124.

An additional audio output unit 152' may be provided on the backside of the terminal body. The additional audio output unit 152' may implement a stereo function together with the audio output unit 152 shown in FIG. 2A and may be used for implementation of a speakerphone mode in talking over the terminal.

A broadcast signal receiving antenna 116 may be additionally provided at the lateral side of the terminal body as well as an antenna for communication or the like. The antenna 116 may be considered a portion of the broadcast receiving module 111 shown in FIG.1 and may be retractably provided on the terminal body.

The power supply 190 for supplying a power to the mobile terminal 100 may be provided to the terminal body. The power supply 190 may be built within the terminal body. Alternatively, the power supply 190 may be detachably connected to the terminal body.

FIG. 2B also shows a touchpad 135 for detecting a touch that is additionally provided on the rear case 102. The touchpad 135 may be configured in a light transmittive type like the display 151. If the display 151 outputs visual information from both faces, the display 151 may recognize visual information via the touchpad 135 as well. The information outputted from both of the faces may be controlled by the touchpad 135. Alternatively, a display may be further provided to the touchpad 135 so that a touchscreen may also be provided to the rear case 102.

The touchpad 135 may be activated by interconnecting with the display 151 of the front case 101. The touchpad 135 may be provided in rear of the display 151 in parallel to one another. The touchpad 135 may have a size equal to or less than a size of the display 151.

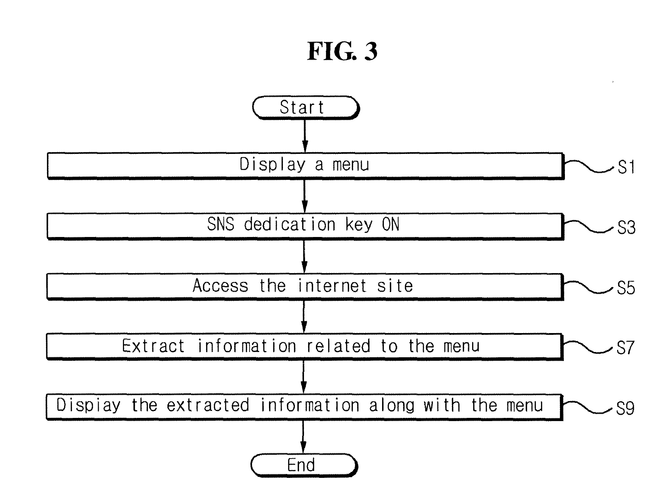

In the following description, the method for controlling a menu in a mobile terminal may be explained by referring to FIG. 3, according to the present disclosure.

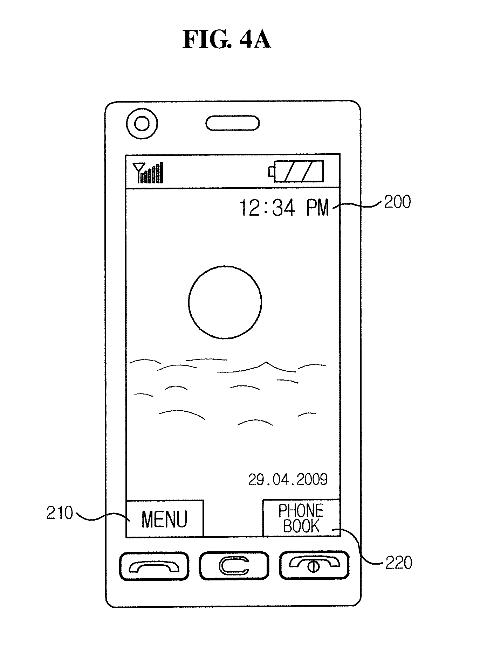

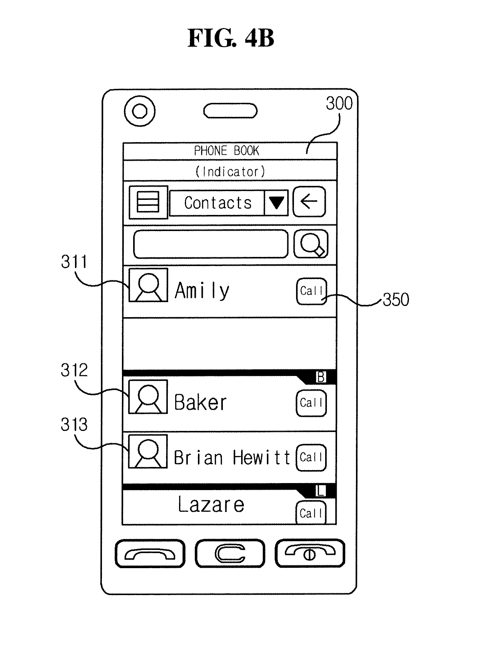

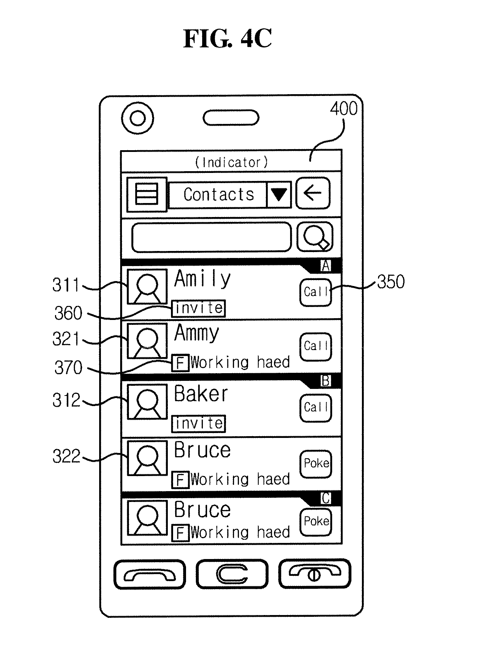

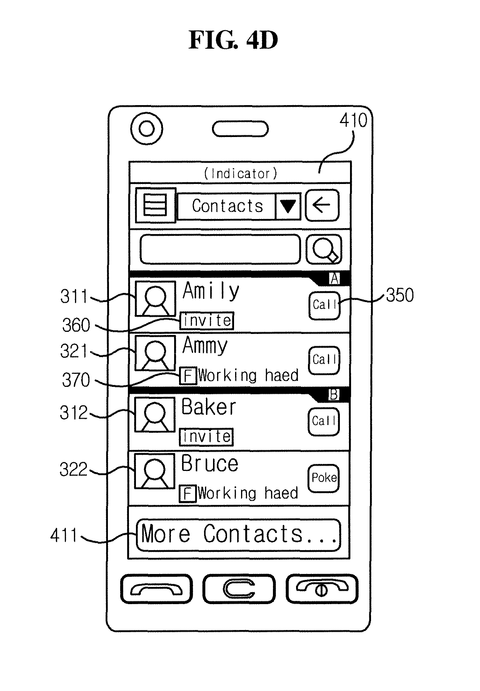

FIG. 3 is a flow chart for explaining the method of controlling a menu in a mobile terminal, according to one embodiment of the present disclosure. As shown in the FIG. 3, the user uses a user input 130 of the mobile terminal 100 to display a menu on the display unit 151, where the menu is stored in a memory 160 of the mobile terminal 100 (S1). The menu may include an idle screen, a phone book screen, and a gallery screen. In this status, an SNS (Social Network Service) dedication key is pressed to access a predetermined web site (S3). The SNS dedication key means a dedication key for accessing a private blog or mini home page such as Cyworld and My space. The side key may be used as the SNS dedication key. This internet site may be accessed by the dedication key as well as general input manner. On the other hand, if the dedication key is pressed, the controller 180 activates the wireless communication module 110 to access the predetermined internet site (S5). The internet site may be an SNS site. The plurality of internet sites may be set up. Alternatively, the internet sites may be restricted to the site which is related to the user. Namely, though the user of the mobile terminal may set up an internet site, a manager of the site may restrict the mobile terminal from accessing the site. In this case, the message may be received through the wireless communication module 110 of the mobile terminal 100, where the message informs that the accession is restricted. Again, if the mobile terminal accesses the internet site, the controller extracts information related to the menu which is displayed on the display unit 151 (S7). For example, if the menu displayed on the display unit 151 is a phone book list, the extracted information (menu relation information) may be a contact list of the internet site. This extracted information through the wireless communication module 110 of the mobile terminal may be displayed along with the menu (S9). At this point, the user may execute a function of the internet site on the menu which has been displayed on the display unit 151. For example, the invitation function of the internet site which is accessed may be applied on the phone book list. The specific examples of those things will be explained in the following description through FIGS. 4 to 8.

Also, if the user sets up a predetermined area and the mobile terminal 100 enters the area, a position information module 115 may detect it. Accordingly, the controller 180 activates wireless communication module 110 to access the predetermined internet site.

Alternatively, if the user enters a menu related to a downloaded menu from the internet site after the downloaded menu from the internet site is previously stored in the memory 160 according to the user's set-up, the pre-stored downloaded menu may be displayed with the original menu.

Alternatively, according to the user's set-up, the mobile terminal 100 may access the internet site periodically to display the changed items on the display unit 151 in real time by downloading the menu relation information. At this time, the alarm unit may be operated to inform the change of the information.

According to the embodiment of the present disclosure, the user may obtain the information of the internet site. Moreover, the user may execute a function of the internet site through the mobile terminal.

In the following description, the various implementations of the present disclosure may be explained with FIGS. 4 to 8.

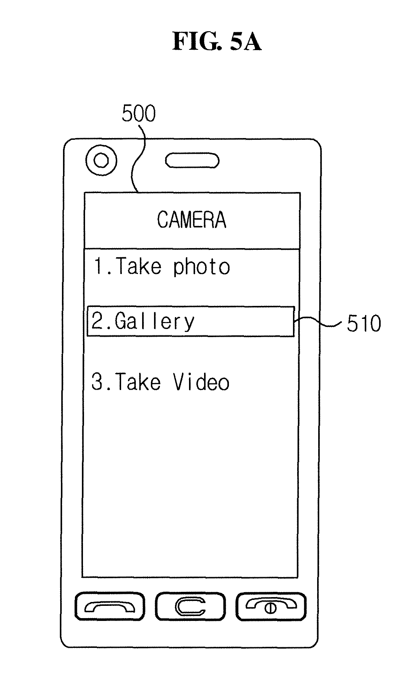

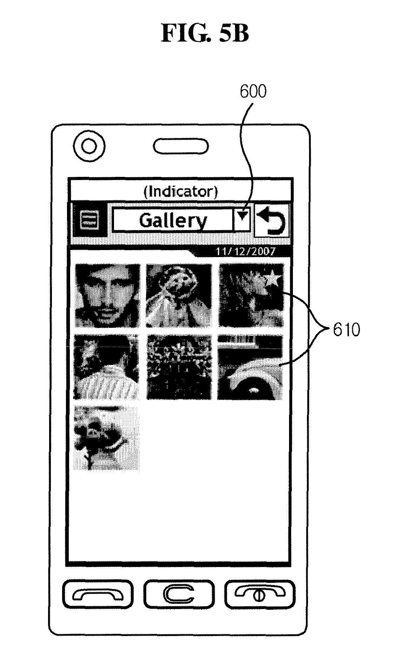

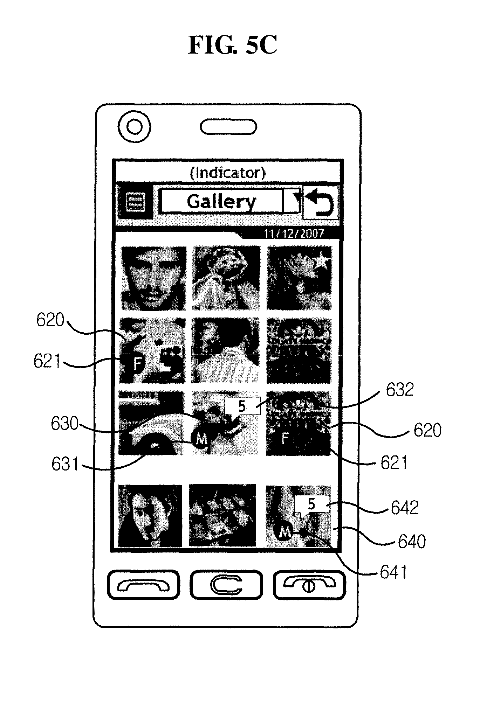

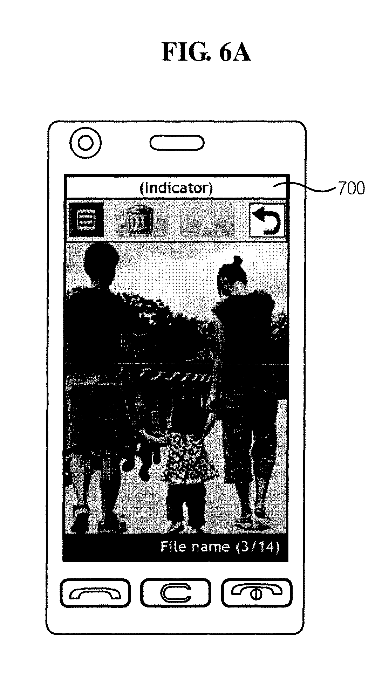

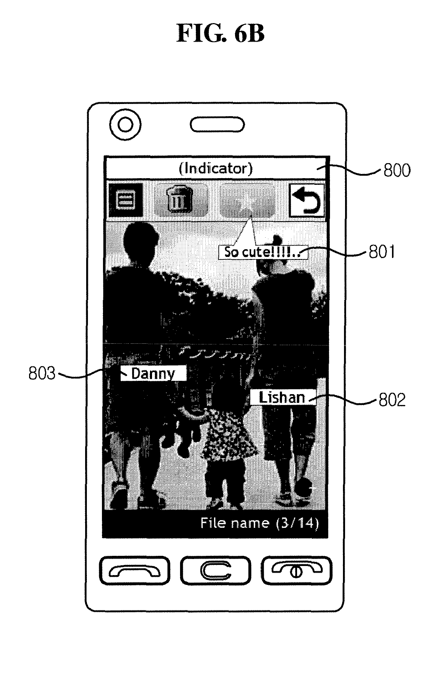

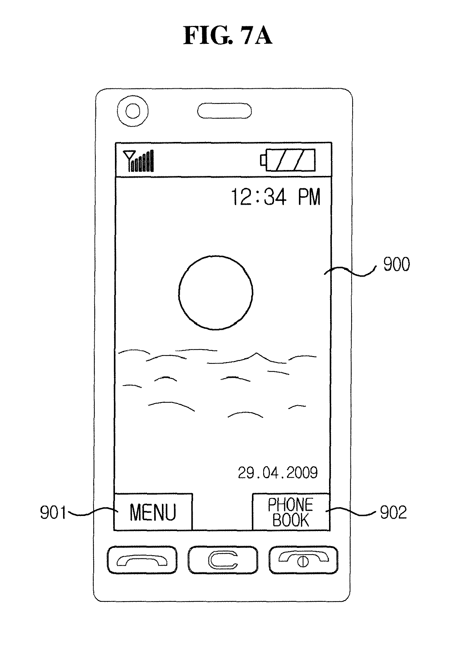

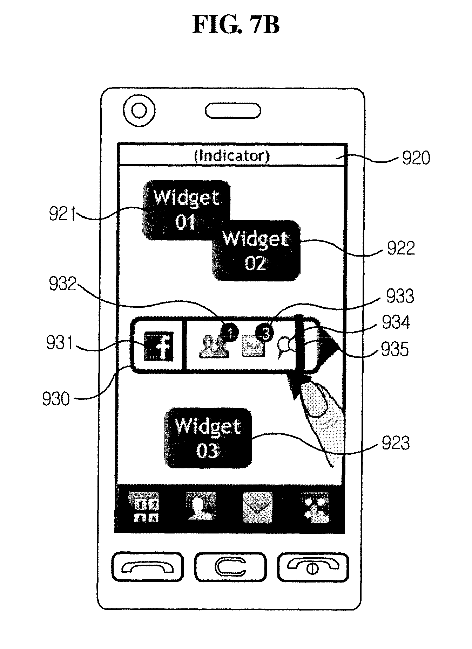

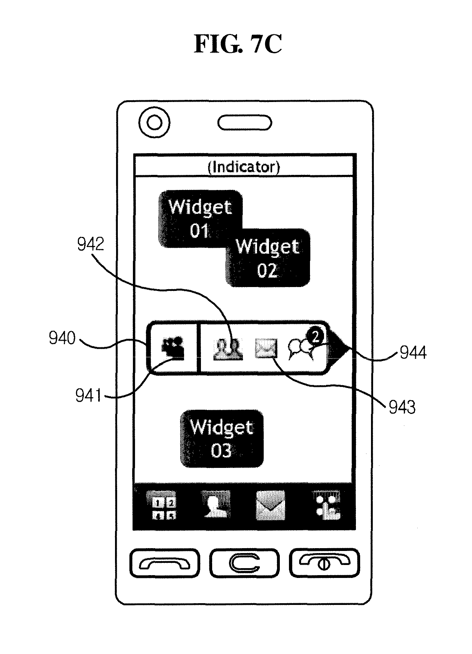

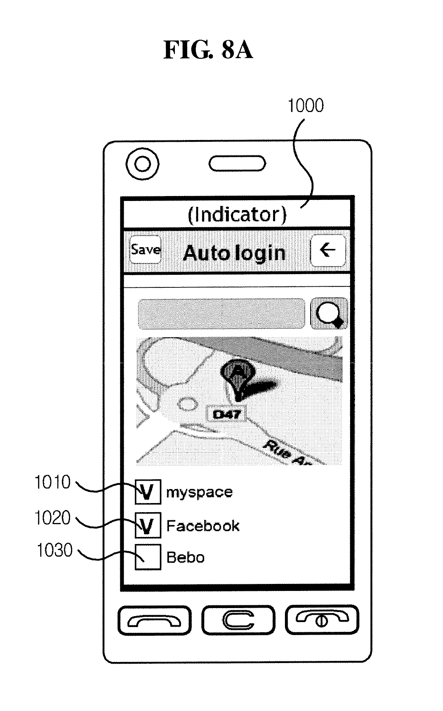

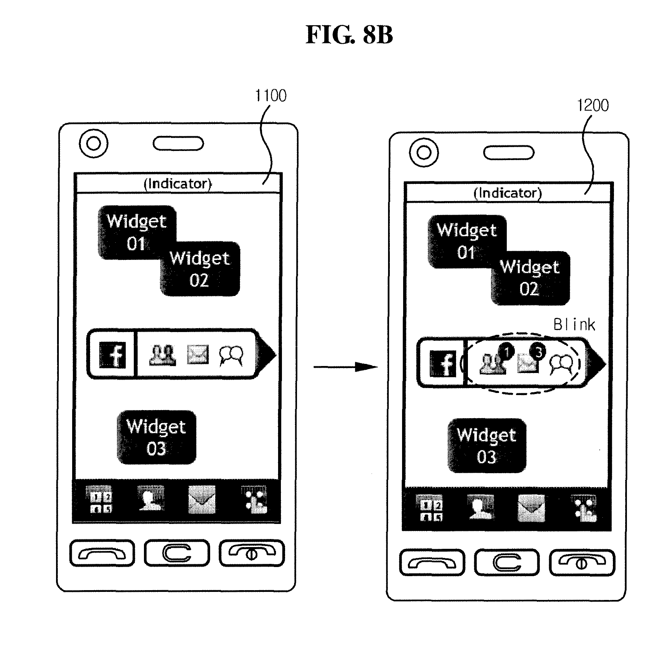

FIG. 4 illustrates a first implementation of the mobile terminal where the method of controlling a menu in a mobile terminal is applied, FIG. 5 illustrates a second implementation of the mobile terminal where the method of controlling a menu in a mobile terminal is applied, FIG. 6 illustrates a third implementation of the mobile terminal where the method of controlling a menu in a mobile terminal is applied, FIG. 7 illustrates a fourth implementation of the mobile terminal where the method of controlling a menu in a mobile terminal is applied, and FIG. 8 illustrates a fifth implementation of the mobile terminal where the method of controlling a menu in a mobile terminal is applied.

### [First implementation]

FIG. 4 illustrates a first implementation of the mobile terminal where the method of controlling a menu in a mobile terminal is applied. FIG. 4A illustrates an idle screen 200 of the mobile terminal 100. The idle screen includes a menu icon 210 and a phone book icon 220. If the user uses a user input unit 130 to select the phone book icon 220, a phone book screen 300 is displayed on the display unit 151. The phone book list 311, 312, 313 is displayed on the phone book screen 300. Each phone book item of the phone book list has a call icon 350. In a case that the display unit 151 is a touch screen, the attempt to call may be made by selecting the call icon 350. In this status, if the SNS dedication key is pressed, the phone book screen of FIG. 4B may be changed to FIG. 4C. FIG. 4C illustrates a composite phone book list screen 400 where the phone book list stored in the memory 160 of the mobile terminal 100 and the contact list stored in the server is displayed together. The phone book list 311, 312 and the contact list 321, 322 are included in the composite phone book list screen 400. A site icon 370 showing the origin of the contact list is included in the one item of the contact list. Moreover, an invitation icon 360 is displayed on one item 311. The invitation function is one of the internet functions. Namely, in a case that the phone book item is not included in the contact list by comparing the phone book item of the phone book list with the contact list, if the invitation icon 360 is selected on the phone book list, the invitation function of the internet is executed on the phone book item by using an e-mail address in the phone book item. Alternatively, if the phone number data is included in the item of the contact list, the attempt to call may be simply made by selecting the call icon 350 included in the contact list.

FIG. 4D illustrates another embodiment of the composite phone book list. An additional view icon 411 is displayed with phone book list on the composite phone book list 410 of another embodiment. The phone book list may be one of the most frequent phone book list and the contact list of the internet site. Here, the additional view icon is selected to show more items.

According to the implementation of the present disclosure, the user may easily obtain the contact list of the internet site which has been set up by the mobile terminal. And, the user may attempt to call through the contact list.

### [Second Implementation]

FIG. 5 illustrates a second implementation of the mobile terminal where the method of controlling a menu in a mobile terminal is applied.

FIG. 5A illustrates a camera menu screen 500 of the mobile terminal 100. If the user uses a user input unit 130 to select a gallery icon 510 included in the camera menu screen, as shown in FIG. 5B, a gallery screen 600 is displayed on the display unit 151. As shown in FIG. 5B, the gallery screen may include the plurality of the thumb nail images 610. In this status, if the SNS dedication key is pressed, the controller activates a wireless communication module 110 to download the gallery images 620, 630, 640 from the predetermined site. Then, the controller displays the gallery images with the thumb nail images. At this time, icons 621, 631, 641 showing the origin of the gallery images may be displayed together, referring to FIG. 5C. The user may select a gallery image to store it in the memory 160 of the mobile terminal 100. Alternatively, in a case that the gallery images are downloaded from the plurality of the sites, only some gallery images from specific site may be displayed, according to the user's set-up. For example, if Myspace icon 631 is selected, the gallery image 630 from the Myspace is displayed on the display unit 151. Alternatively, the Myspace may be selected through the specific menu. Reference numbers 632, 642 are respectively a reply number icon showing the number of the reply in the gallery images 630, 640. If the user selects the reply number icon, the reply is directly displayed on the display unit 151.

According to the present disclosure, the user of the mobile terminal may easily download some images from the pre-set internet site in the gallery screen.

### [Third Implementation]

FIG. 6 illustrates a third implementation of the mobile terminal where the method of controlling a menu in a mobile terminal is applied. FIG. 6a illustrates a status where the image 700 downloaded from the internet site is displayed on the display unit 151.

In a state that the image 700 is displayed on the display unit 151, if the SNS dedication key is pressed, the controller 180 activates the wireless communication module 110 to access the site which is an origin of the image. At this time, the tag information of the site included in the image file may be used. If the sited is accessed, as shown in FIG. 6B, the footers 801, 802, 803 stored in the site are displayed. If the footers are hyperlinked, when the user selects the footer, the controller 180 moves to the site which is hyperlinked to display the site on display unit 151.

According to the third implementation of the present disclosure, the user may confirm more information in a case that the image from the specific site is displayed with images stored in the memory.

### [Fourth Implementation]

FIG. 7 illustrates a fourth implementation of the mobile terminal where the method of controlling a menu in a mobile terminal is applied. FIG. 7A illustrates an idle screen 900. The idle screen may include a menu icon 901 and a phone book icon 902. In this status, if the SNS dedication key is pressed, the controller 180 access an internet site which is previously set up. Then, as shown in FIG. 7B, the composite idle screen 920 is displayed on the display unit 151. The composite idle screen 920 includes site widgets 921, 922, 923 from the internet site, and a site tool bar 930. The site widgets may include a clock, a bubble word, an avartar and an image. The first site tool bar 930 may include an origin icon 931 for showing the origin of the tool bar, a friend icon 932 for representing the friend who logs on, a new message icon 933 for showing the new message, and a new reply icon 934 for showing the new reply. When the friend icon 932 is selected through the user input unit 130, then the list of the friends who log on in the first site is displayed on the display unit 151. When the new message icon 933 is selected, the controller moves to the message where the new reply is added, or to the gallery where the new replay is added. If the tool bar change signal is generated on the first site tool bar 930, as shown in FIG. 7C, a second tool bar 940 is displayed. This change signal is generated by the scroll signal on the first site tool bar 930 on the touch screen(Arrow mark 935). Alternatively, the change signal may be generated by the user input unit 130. The second site tool bar 940 may include an origin icon 941 for showing the origin of the tool bar, a friend icon 942 for representing the friend who logs on, a new message icon 943 for showing the new message, and a new reply icon 944 for showing the new reply. The icons 941, 942, 943, 944 included in the second tool bar 940 have the same function of the icons 931, 932, 933, 934 included in the first tool bar 930. The number of the message icon and the new reply icon show the number of the message or the reply which has been received recently.

According to the fourth implementation of the present disclosure, the user may conveniently use the SNS service in a status of being on an idle screen of the mobile terminal 100.

### [Fifth Implementation]

FIG. 8 illustrates a fifth implementation of the mobile terminal where the method of controlling a menu in a mobile terminal is applied. FIG. 8A illustrates a screen for setting up the condition for accessing the SNS internet site. FIG. 8A shows an SNS area set-up screen 1000. As shown in FIG. 8A, the map data for setting up the area is displayed on the display unit 151. And, the SNS site set-up icons 1010, 1020, 1030 are displayed on the display unit 151. If at least one of the site set-up icons is selected, the controller extracts the relation information of the selected SNS site to display it on the idle screen. The relation information may include a widget and a tool bar, as shown in FIG. 7. On the other hand, the condition for accessing the SNS and the sort of the SNS may be set up by using the map data and a specific menu. After completing the set-up, if the mobile terminal 100 enters the area which satisfies the condition, the controller 180 automatically activates the wireless communication module 110 to access the SNS site, and displays the composite idle screen 1100 on the display unit 151 by extracting the idle relation information from the SNS site.

FIG. 8B illustrates the composite idle screen 1100. The operation and the function of the composite idle screen have been explained in the fourth implementation.

Namely, the tool bar and the widget connectedly operate with the internet site. Therefore, if the new message is received in the internet site or the new reply is written in the internet site, the tool bar and the widget displays the changed information.

As aforementioned, the method for controlling a menu in a mobile terminal and a mobile terminal using the same are not limited to the constitution and method of the embodiments. It should be understood that the person in the art may easily modify and alter the present disclosure by selectively combining the entire or part of the each embodiment.

## Claims

**1.** A method for controlling a menu in a mobile terminal (100), the method comprising:
accessing (S5) a site having a predetermined internet address by connecting an internet server;
extracting (S7) a menu relation information related to the menu stored in the mobile terminal from the site;
and
displaying (S9) a composite menu (400; 410; 800; 920; 1100; 1200) based on the menu stored in the mobile terminal and the menu relation information.

**2.** The method of claim 1, further comprising executing a function of the site by selecting an element of the composite menu.

**3.** The method of any one of claims 1 and 2, wherein the menu relation information is displayed distinguishably from the menu stored in the mobile terminal.

**4.** The method of any one of claims 1 to 3,
wherein, the menu is a phone book screen (300) comprising a phone book list (311, 312, 313) stored in the mobile terminal, and the menu relation information comprises a contact list stored in the site and wherein the composite menu comprises the phone book list stored in the mobile terminal and the contact list stored in the site displayed together.

**5.** The method of any one of claims 1 to 4,
wherein, the menu is a gallery screen (600) comprising at least a picture file (610) and the menu relation information comprises at least an image file (620, 630, 640) stored in the site, and wherein the composite menu comprises the picture file and the image file displayed together.

**6.** The method of any one of claims 1 to 5,
wherein, the menu is an idle screen (900), and the menu relation information comprises status information stored in the site, and wherein the composite menu comprises a tool bar based on the status information and displayed on the idle screen.

**7.** The method of any one of claims 1 to 6,
wherein, the step of accessing a site having a predetermined internet address by connecting an internet server comprises accessing a plurality of sites each having a predetermined internet address by connecting the corresponding internet servers, and the step of displaying the composite menu comprises displaying the menu relation information and distinguishing a source of the menu relation information.

**8.** The method of any one of claims 1 to 7, further comprising
determining a position of the mobile terminal;
and activating the wireless communication module if the mobile terminal is determined to have entered a predetermined area.

**9.** A mobile terminal (100) comprising:
a display unit (151) configured to display a menu stored in the mobile terminal;
a wireless communication module (110) configured to access an internet server; and
a controller (180) configured to access a site having a predetermined internet address by connecting an internet server; to extract a menu relation information related to a menu stored in the mobile terminal from the site; and to display the menu and the menu relation information by adding the menu relation information to the menu.

**10.** The mobile terminal of claim 9, wherein the controller is further configured for executing a function of the site by selecting an element of the composite menu.

**11.** The mobile terminal of any one of claims 9 and 10, wherein the controller is further configured for displaying the menu relation information distinguishably from the menu stored in the mobile terminal.

**12.** The mobile terminal of any one of claims 9 to 11,
wherein, the menu is a phone book screen (300) comprising a phone book list (311, 312, 313) stored in the mobile terminal, and the menu relation information comprises a contact list stored in the site and wherein the controller is further configured for displaying the composite menu comprising the phone book list stored in the mobile terminal and the contact list stored in the site together.

**11.** The mobile terminal of any one of claims 9 to 12,
wherein, the menu is a gallery screen (600) comprising at least a picture file (610) and the menu relation information comprises at least an image file (620, 630, 640) stored in the site, and wherein the controller is further configured for displaying the composite menu comprising the picture file and the image file together.

**14.** The mobile terminal of any one of claims 9 to 13,
wherein, the menu is an idle screen (900), and the menu relation information comprises status information stored in the site, and wherein the controller is further configured for displaying on the idle screen the composite menu comprising a tool bar based on the status information.

**15.** The mobile terminal of any one of claims 9 to 14, further comprising:
a position information module (115) configured to confirm a position of the mobile terminal,
wherein the controller is further configured for activating the wireless communication module if the mobile terminal is determined to have entered a predetermined area through the position information module.
